# EUROPEAN PATENT APPLICATION

(11) **EP 2 565 838 A1**
(43) Date of publication of application: **06.03.2013**
(21) Application number: 12182562.4
(22) Date of filing: 31.08.2012
(51) Int. Cl.: G06Q 30/02

(54) **User-defined advertisement targeting**

(30) Priority: 01.09.2011 US 201161530354 P; 01.09.2011 US 201161530345 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The present invention relates to matching of an advertisement to content. A method for targeting of an advertisement is provided, comprising uploading content provided by a user, assigning information to the content by the user, selecting an advertisement based on the information, presenting the content in connection with the selected advertisement based on the information, modifying the information by the user after the advertisement has been selected, selecting a new advertisement based on the modified information, and presenting the content in connection with the selected new advertisement based on the modified information. Furthermore, a server for targeting of an advertisement is defined. The inventive method and server for targeting of an advertisement greatly improve the selection and presentation of advertisements related to uploaded content on a system or platform.

## Description

### Field of the Invention

The present invention relates generally to matching of advertisement to content and, more particularly, to targeting of advertisement related to user-uploaded content on media environments like social networking sites, interactive television or user/corporate-driven media applications.

### Background

Online systems or platforms, which allow users to upload and present content created or provided by the user, such as images, data files, documents, audio or video files, strongly rely on advertisement in order to provide free services and to ensure up-to-date technical realizations of the hosting systems. In order to address the viewers or visitors of the corresponding site, the advertisement is typically presented in combination with said content. However, the selection of an advertisement for a particular content and its presentation remains problematic.

Usually, a user uploading content to a server hosting, for example, a social networking site or another platform, has no control over the advertisement(s) that will appear alongside, when the content is presented to a viewer. Rather, advertisements are typically selected randomly or according to some fixed rules and often have no relation to the content uploaded by the user. As a consequence, such advertisements often do not match the interests of viewers and are therefore ignored by the viewers or can even distract or irritate viewers.

Also, a simultaneous presentation of the user's content and the advertisement may collide with each other in that both presentations remain unbalanced and uncoordinated with respect to each other. The overall simultaneous presentation may even be misleading or unappealing to viewers. For example, an audio file posted by a user may interfere with an animated advertisement comprising sound.

A label-based Internet advertisement publishing method is described in CN 101188005, wherein content to be published on a website is marked with labels. All labels uploaded to the website are matched with labels provided by an advertisement publisher in order to generate a webpage for display of advertisement(s) that the advertisement publisher wants to deliver. Therefore, a webpage is generated for an advertisement and suitable content is selected. Although this approach enables delivery of advertisement on a webpage, the labels marking the content cannot be modified once the content has been uploaded. Also, the labels cannot be used to define presentation characteristics for a simultaneous presentation of content and advertisement.

Therefore, it is an object of the present invention to improve the selection and presentation of advertisements related to uploaded content on a system or platform.

### Summary

The problem is solved by the method for targeting of advertisements and the server for targeting of advertisements as defined in the claims. Preferred embodiments of the inventive approach are defined in the corresponding dependent claims.

A method for targeting of an advertisement according to the present invention comprises the processing steps of uploading content provided by a user, assigning information to the content by the user, selecting an advertisement based on the information, presenting the content in connection with the selected advertisement based on the information, modifying the information by the user after the advertisement has been selected, selecting a new advertisement based on the modified information, and presenting the content in connection with the selected new advertisement based on the modified information.

The inventive method allows a selective targeting of an advertisement, which is based on information, such as structured or unstructured data, provided by a user uploading the content. The information is preferably used to characterize the uploaded content and/or features of a most suitable type of advertisement. Thus, instead of employing random assignment or indirect target matching techniques for selection of an advertisement on a server, an online platform, or a dedicated system of an advertisement network, the user selectively assigns information to the uploaded content, which eventually allows for selection of an advertisement best fitting the uploaded content. Hence, the user may specify advertisements he wishes to appear alongside the content. In particular, by assigning information to the content, the user is capable of characterizing one or more advertisements that most likely match with the uploaded content.

The user may generate the content and provide the results on a client, which may be connected to a network in order to upload the content via the network to any kind of server or online system capable of hosting content and providing the content to an unrestricted community or audience or a limited group of people or customers. Preferably, the server or system hosts a media environment or any other suitable presentation system. The user may be required to authenticate at the server and may request permission to upload the content. After a successful authentication, the user may be granted access to a personalized environment or personal space to which the content may be uploaded and where the user may initially assign, and later on modify, the information.

The server may allow the user to upload content of any type and format or may require the user to deliver content of a particular type and format supported by the server. The server may check the uploaded content and, if necessary, transform the content to a suitable format for the hosted platform, such as a social network, interactive television and others. The server may further generate preview data, such as thumbnail images or sound samples used to generate an overview of all content uploaded by the user.

Preferably, the user assigns the information to the content via an assignment module provided by the server, or may be required to directly attach the information to the content. In order to better match potential changes of the target audience, and to ensure an up-to-date match of advertisement and content, the inventive method enables the user to modify the information at any time after the advertisement has been selected by the server. Preferably, the user may access the interface or the personal space at any time and may change or update the information as needed. The user may also re-transmit the changed or updated information via the data stream or a newly created connection to said server. In order to enter suitable data and to facilitate both the initial assignment and later modifications of the information, the server may provide the user with a list of already used specifications and may suggest a most likely selection based on information previously provided by the user or based on any kind of automated matching or review strategy for the uploaded content, such as image pattern matching for visual content or sound analysis for audio data. Even though a pre-selection may be provided, the user may modify the information and adjust the data in order to best suit the uploaded content and the characteristics of matching advertisements.

Preferably, the server or a processing engine of the server pre-selects one or more advertisements for the content based on the assigned information, e.g., by matching the information with characteristics of advertisements that have been provided by an advertisement provider, a server provider, or any other third-party data provider. Preferably, advertisements with the highest matching or ranking scores are grouped in a set of pre-selected advertisements linked to the content. The set may comprise copies of the pre-selected advertisements or links to a storage buffering the advertisements for presentation. The one or more selected advertisements may comprise any multimedia content, such as images, animated images, sound or music, video, and interactive content, or any kind of data, information means or product-related material intended to be delivered to an interested audience. Said pre-selection of one or more advertisements is preferably performed each time the user modifies the information and each time new advertisements or updated advertisement characteristics are added to the server. Said pre-selection may also be performed at regular intervals or after a time period selected by the user, irrespective of, or in addition to, any new data available on the server.

In order to present the content, the server or the processing engine may select an advertisement from the set of pre-selected advertisements and present the advertisement in connection with the content based on the assigned information. Thus, the information may also be used to define presentation characteristics of the selected advertisement in relation to the content and may also be used to further restrict the set of advertisements to suitable and compatible media types and presentation formats that do not collide with the presented content.

Preferably, if the user modifies the information after the advertisement has been selected, a new set of advertisements may be pre-selected based on the modified information and new advertisements may be selected from the new set of pre-selected advertisements, based on the modified information for presentation in connection with the content. Similarly, the new information may also be used to define presentation characteristics for the selected advertisement, such as suitable and compatible media and data formats that do not collide with the content.

The inventive method greatly improves the targeting and presentation of advertisement related to uploaded content, since the advertisement is selectively targeted towards an audience, which is specified by the user and is therefore likely to be most interested in the user's content and eventually the targeted advertisement. In addition, based on the information provided by the user, the selected advertisement is presented in connection with the content in a way that does not collide or interfere with the content and therefore does not disturb the audience. Also, since the user may modify the information at any time, the inventive targeting is highly flexible and dynamic. Thus, all participants greatly benefit from the inventive method, since the advertisements are delivered to an intrigued audience in a coordinated way, usually to people in the peer group of the user. The inventive approach therefore allows for presentation of content in connection with a most suitable, non-distracting, appealing and up-to-date advertisement, which is well perceived by an interested audience.

In a preferred embodiment of the present invention, said assigning information to the content is performed during uploading of the content or after the content has been uploaded. During uploading, the user may access an assignment module provided by the server to input the information. This preferred processing may decrease the overall duration of the assignment and may speed-up the initial processing, since the user needs not to wait until the upload of the content has finished. Likewise, assigning the information after a successful upload may increase the security and integrity of the upload, since the server may check whether or not a valid content has been uploaded and may only allow assignment of information to a valid content.

In another preferred embodiment of the present invention, said uploading content further comprises posting the content on a platform hosted by a server. Said platform may be any kind of content-sharing environment or communication environment, such as a blog, forum, news feed, or preferably a social networking site, which enables users to upload content to be viewed by other users of the platform, by a limited group of people, or an unrestricted community or audience.

According to yet another preferred embodiment of the present invention, said presenting the content in connection with the selected advertisement comprises presenting the advertisement via a live stream or a live feed. Preferably, the content and the selected advertisement are combined based on the information and fed into a data stream provided to a viewer or an audience via the live stream or live feed. The content may also be integrated into a data stream of advertisements that all meet the criteria set by the user by means of the information. The integrated data stream may thereafter be supplied to the live stream or live feed. Presenting the content may further comprise establishing the live stream or live feed whenever a viewer requests the content.

According to another embodiment of the present invention, said presenting the content in connection with the selected advertisement comprises presenting the content in a media environment. The media environment may be any kind of a social networking site or social network, interactive television, online platform or any other user/corporate-driven media application or presentation system. Preferably, the information assigned to the content may be used to define a location, size and modality, e.g., visual or audio content, of the selected advertisement as well as interaction capabilities and elements enabling a viewer or audience to interact with the presentation.

According to a particularly preferred embodiment of the present invention, a viewer watching the presented content and advertisement is able to interact with the advertisement. Preferably, the server allows for presentation of an interactive advertisement or generates interaction components based on the information, which are attached to the advertisement. Such interactive advertisement or the interaction components may comprise links to further data provided by an advertiser, such as a website or further advertisements, or may comprise interactive elements, such as input fields, buttons and other means allowing the viewer to interact with the advertisement and to provide feedback data. Said interactive advertisement may also be an online game or any other interactive content targeting the audience. Since the advertisement has been selected and presented based on the information provided by the user, the audience interested in the content will most likely not be distracted or annoyed by the advertisement.

In another preferred embodiment of the present invention, said method further comprises assigning the user a credit when the viewer interacts with the advertisement. Preferably, the server is configured to track requests of viewers related to a particular content as well as interactions with presented advertisements. The server may comprise a database to store, for each access to the content, a viewer identification, such as an IP address of a client of the viewer or other identification data, an advertisement identification, related presentation time and duration as well as interaction characteristics, such as clicks on the advertisement or interaction components associated with the advertisement. The server may process the data at regular intervals to calculate values and statistics indicating views of, and interactions with, particular advertisements presented in connection with the content, such as a hit ratio of advertisements. Preferably, the credit assigned to the user may be a small share of the advertisements' revenue, such as a pre-defined revenue share of, for example, 2%. Thus, the benefit to a user for correctly tagging the uploaded content is preferably directly connected to the revenue, which likely will motivate users to describe the uploaded content as precisely as possible to match the target group of the advertisement with the target group of the content, i.e., the viewers that really care for the content.

In yet another preferred embodiment of the present invention, said assigning information to the content comprises assigning a data structure including one or more elements, each element representing one of a tag, a keyword, and a parameter. The data structure may be any kind of an abstract data type, such as an array, a linked list, a set, a map, a general container, or a tree-or graph-like structure. The one or more elements of the data structure may have the same data type or a different data type, such as any basic or abstract data type. For example, the data structure may be an array of Boolean values, characters, or numbers. Preferably, the data structure may be a container including Boolean values to represent tags, strings to represent keywords, and a set of data pairs representing parameters and respective values. The data structure may also represent a class, wherein the one or more elements represent members of said class. Preferably, in this case, the one or more elements are processed to generate an instance of said class, which is thereafter assigned to the content.

The tags, keywords, parameters, and also additional data may be freely defined by the user in order to most suitably match the content with advertisements. The tags or keywords may also be pre-defined, such that the user may select from a list or selection of suitable values. Also, the available parameters may be presented to the user, who may appropriately select relevant parameters and input the corresponding values. The assigned values and data may be parsed and analyzed and transformed into the data structure. The data structure may be further processed into a binary representation or may be represented as unstructured or (semi-)structured data, such as in an XML document attached to the content.

Preferably, the information assigned to a content may represent a series of keywords or tags to characterize the topics addressed by the content combined with parameters to define the presentation characteristics for the selected advertisement. Based on this information, the advertisement may be selected and combined with the content in multiple processing steps, wherein the assigned keywords may be used to select suitable advertisements and the assigned parameter values may be used to pre-process the selected advertisements for presentation. Further information may specify the modality of the advertisement, such as visual, audio, or audio/video advertisement, as well as interaction capabilities of a suitable advertisement. Such tags may also exclude certain modalities of the advertisement from display during presentation of the content. For example, a particular tag may determine that a video is only presented without corresponding sound if an uploaded sound file is being played to a viewer.

According to an embodiment of the present invention, said information specifies one or more of a target group, a media type, a presentation format, a time period for presenting the selected advertisement, and topics related to the content, a preferred advertisement, or both. Preferably, said information specifies advertisement characteristics and generally describes the content. Said characteristics may be any characteristics previously assigned to an advertisement, which are thereafter matched to the information to select the most suitable advertisement for the presented content.

In particular, the user may estimate a target group by defining an audience that will be interested in the uploaded content. Information related to the target group may comprise an average age or age range of the target group, interests, or skills, as well as additional characteristics, such as a type of a peer group, membership in a particular community, and others. The user may also suggest what kind of advertisement should be linked to the content by specifying content keywords, a presentation format and style, a compatible media type, appropriate topics addressed by the advertisement, and other advertisement characteristics or combinations thereof defining advertisements suitable for the uploaded content.

The user may also define a preferred position and size of the advertisement in relation to the presented content. The user may specify that advertisement is displayed alongside and simultaneously with the content, for example, as a banner of a certain size and position, placed above, below or beside the content, or as a video played before the content is presented. Such video advertisement may also be played simultaneously with a presentation of the content or during an advertisement break, for example during a pre-defined break of a longer video sequence.

Preferably, a time period for presenting the selected advertisement is defined by the information, such as by time-based tags used to define temporal conditions based on time, or a time range of a day, week, month, or year. Thus, a user may, for example, specify a date, duration, or time range of a certain event related to the content, such that suitable advertisements are only displayed during the event or until the end of the event specified by the time-based tags. After expiration of the time, or if the temporal conditions are no longer fulfilled, the user may modify the assigned information to further attract viewers still interested in the content. The user may also define multiple sets of information, each tagged with one or more differing time-based tags in order to characterize suitable advertisements in several time ranges, which may also overlap. Consequently, the time-based tags may be evaluated first, and thereafter advertisements may be selected based on the remaining information assigned by the user, if the corresponding temporal conditions are met. Obviously, the remaining information may still be taken into account for selection of advertisements in a case where none of the temporal conditions are being met. Alternatively, the presentation of the content may also be deactivated if the temporal conditions are not met. However, in such cases, the user may preferably be notified about expiration of the temporal conditions.

By providing information about the target group and other advertisement and presentation characteristics, suitable advertisements may be advantageously matched to the content and presented in connection with the content without disrupting the experience of a viewer, thus allowing for a smooth presentation and intense perception of both content and advertisement.

Furthermore, a computer-readable medium according to the present invention has instructions stored thereon, said instructions, when installed and executed on a computing device, causing said computing device to perform a method according to the present invention.

A server for targeting of advertisements according to the present invention comprises an upload interface configured to upload content provided by a user to the server, an assignment module accessible by the user, said assignment module configured to assign information to the content, a processing component configured to select advertisement based on the information, and an output configured to present the content in connection with the selected advertisement based on the information, wherein the assignment module is further configured to allow the user to modify the information after the advertisement has been selected by the processing component, wherein said processing component is further configured to select a new advertisement based on the modified information and said output is further configured to present the content in connection with the selected new advertisement based on the modified information.

The inventive server enables uploading and presentation of user-generated content in combination with an advertisement, wherein the user assigns information to the content and may thereafter modify the information used to select suitable advertisements matching with the uploaded content. The server may be provided on any computing platform capable of presenting user-uploaded content to viewers or an audience. The computing platform may comprise a single computer or a plurality of interconnected computing devices. In order to store the uploaded content, the assigned information, and advertisements, the server may provide one or more databases, such as at least one database dedicated to the content and assigned information, and at least one database storing a plurality of advertisements. The assignment module of the inventive server may provide the user with means to initially assign information to the content, as well as means to modify the initial information at any time after the advertisement has been selected by the processing component.

Preferably, the processing component may comprise a parser, a matching component, and a selection module. The parser may analyze the information assigned by the user and may transform the information into a data structure pre-defined by the server. The matching component may retrieve characteristics of advertisements provided by the server and match the characteristics with the transformed information. Each comparison is preferably rated by the matching component based on a similarity measure. The results and scores may be buffered at the server and provided to the selection module, which selects a suitable advertisement based on the scores as required.

The content and the selected advertisement are provided at the output, which may be connected to one or more clients via a network, such as the Internet, a cable network, a power line network or a wireless network, where it can be accessed by interested viewers or audience. The output may further comprise a renderer which is preferably configured to render the content. In addition, the renderer may pre-process the selected advertisement based on the information associated with the content or the modified information in order to adjust presentation characteristics of the selected advertisements with regard to the presented content.

By providing means to select and present suitable advertisements for uploaded content based on information assigned to the content by the user, which may be modified at any time after the advertisement has been selected, the inventive server greatly improves targeting and presentation of suitable, up-to-date advertisements in combination with user-uploaded content.

In a preferred embodiment of the present invention, said assignment module is further configured to allow the user to assign the information to the content during uploading of the content or after the content has been uploaded. Preferably, the assignment module may be triggered by the upload interface if a user uploads the content to the server. Thereafter, and concurrently with the uploading of the content, the assignment module may establish a communication channel to a client of said user and may provide the user with means to assign the information. However, the assignment module may also be configured to delay assignment of the information until the content has been successfully uploaded. The assignment module may also check or request checking of the uploaded content by the server, and only allow assignment of information to valid and error-free content.

In yet another embodiment of the present invention, the server further comprises a platform hosted by the server, wherein the content is posted on the platform. The platform may be any kind of software or hardware platform capable of receiving content uploaded by a user, such as interactive and non-interactive content, e.g., images, data and program files, executables, documents, audio or video files, files comprising data for other modalities, as well as combinations thereof. The platform may also be capable of presenting said content in connection with advertisements to a limited group of viewers or an unrestricted audience. Preferably, said platform is a media environment such as a social networking site, interactive television or user/corporate-driven media application.

According to a preferred embodiment of the present invention, said output includes a live stream or a live feed to present the content in connection with the selected advertisement. Said output may establish a communication channel transporting a data stream to a viewer upon request or may broadcast the content continuously in connection with the selected advertisement. In the latter case, one or more viewers may connect to said data stream at any time during streaming of the content and advertisement.

In yet another preferred embodiment of the present invention, said server hosts a media environment coupled to the output to present the content in connection with the selected advertisement. Said media environment may comprise a renderer to render the content and the selected advertisement to the output.

According to another embodiment of the present invention, said server further comprises a feedback channel coupled to the output and configured to provide feedback about interaction of a viewer with the presented advertisement. Said feedback channel may be established as soon as a viewer connects to the output of the server in order to view the content. The feedback channel may be a one-directional or bi-directional communication channel between the viewer's hardware and the server. Preferably, the feedback channel is established as a separate communication channel. However, the feedback channel may also be integrated within or directly coupled to a communication channel of the output, coupling the server with the viewer. The feedback channel may transport any kind of interaction data, such as direct interaction with the advertisement or any changes of state of an interaction device, such as mouse clicks and movements or operation of a remote control. The interaction data may be directly provided to the server in order to generate a suitable response to the interaction.

In yet another preferred embodiment of the present invention, the server further comprises means to assign the user a credit when the viewer interacts with the advertisement. Preferably, the server may manage a plurality of accounts for respective users, for example in a database. Said means to assign the user a credit may be linked to the output, the feedback channel, as well as to the database. Said means may extract or receive data about the advertisement currently presented via the output, and may analyze any feedback data sent over the feedback channel. Said means may also comprise a set of rules and corresponding data to compute the credit based on the type of interaction, the advertisement, and other characteristics.

In a further embodiment of the present invention, said information comprises a data structure including one or more elements, each element representing one of a tag, a keyword, and a parameter. Preferably, the assignment module may generate a pre-selection of suitable or frequently used values and request entry of said information by the user. The assignment module may also accept any unstructured input by the user, parse the input and transform the results into the data structure, which is preferably pre-defined by the server. Thereafter, the assignment module may also present the results to the user and allow for modification of said data. In yet another preferred embodiment of the present invention, said information specifies one or more of a target group, a media type, a presentation format, a time period for presenting the selected advertisement, and topics related to the content, to a preferred advertisement or both. Preferably, said information may specify any advertisement, timing and presentation characteristics related to the uploaded content and a suitable advertisement.

### Description of the Drawings

Further details and characteristics of the invention are described below in exemplifying embodiments of the invention in conjunction with the drawings, wherein:#
- Fig. 1: shows a flow chart of a method according to an embodiment of the present invention; and
- Fig. 2: shows a schematic illustration of a system comprising a server according to an embodiment of the present invention.

### Detailed Description

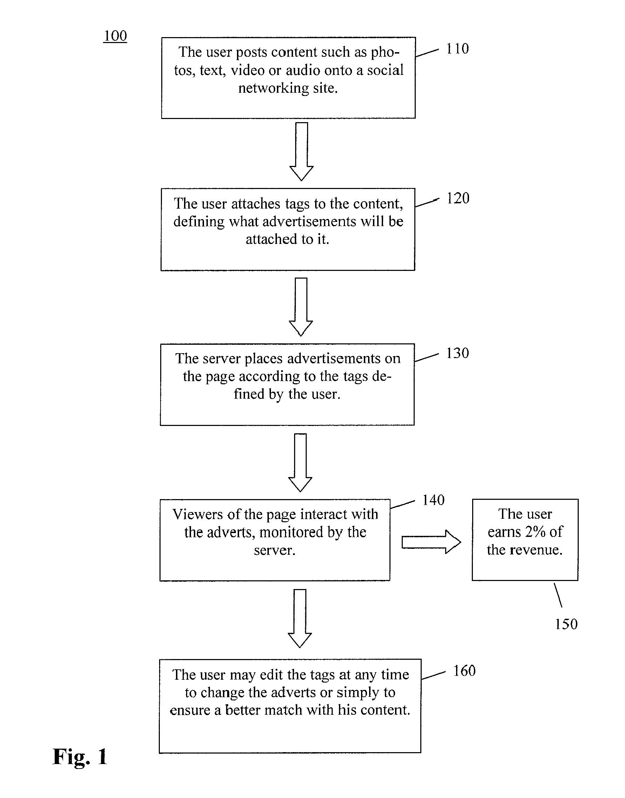

Fig. 1 shows a flow chart of an exemplifying embodiment of a method according to the present invention enabling targeting of advertisement associated with user-uploaded content. The processing 100 may start with uploading of content generated or owned by a user 110, for example, by the user posting the content. Said content may comprise photographs, text, video or audio data, or any other data, files, or media, as well as combinations thereof. Said uploading 110 may further comprise establishing a connection between a user's device and the server, granting the user access to resources of the server, and uploading the content to the server. Thereafter, the user may attach information, e.g., tags, to the content 120, defining suitable advertisements for display in connection with the content. The tags may specify advertisement and presentation characteristics, for example, a target group, suitable topics of an advertisement, a time period and other parameters. The user may freely define the tags or any other information attached to the content, or may preferably be presented with a pre-selection of tags, keywords, parameters and respective values, which the user may choose or modify. In addition, the user may define their own new keywords and tags most suitable for the uploaded content. The user may assign the information during or after uploading of the content, and even before uploading of the content, such that the information may be directly attached to and uploaded with the content to the server.

In a subsequent step, the server may select an advertisement based on the information and place the selected advertisement in connection with the content, for example on a page, according to the information or tags defined by the user 130. In order to select suitable advertisements, the information assigned to the content can be compared with characteristics previously attached to each advertisement stored on the server, or a connected advertising system or network. The attached characteristics may be stored in a database on the server or may be retrieved from one or more dedicated systems or servers of advertisement providers to which the server may connect. The information may also be used to define the presentation style of a combination of the content and selected advertisement, for example by choosing a particular structure, format, alignment or configuration of the presentation.

After selecting the advertisement and presenting the content in connection with the selected advertisement 130, one or more viewers may watch the presentation, for example by browsing the content and selected advertisement or by tuning in to an interactive television program, and may interact with the advertisement 140. The interaction may be monitored by the server and, whenever said viewer interacts with the advertisement, e.g., by clicking on interactive content of the advertisement or by operating a remote control, the user is assigned a certain credit. For example, the user may earn 2% of the revenue 150 or may be assigned a variable amount based on the type of interaction, duration of interaction, further characteristics of the selected advertisement, and other factors.

In order to ensure a best possible match between the content and the expected target audience, the user may edit the tags at any time to change the specification of suitable advertisements or simply to ensure a better match with the content 160.

For example, a user may upload 110 a video providing useful hints on how to play a certain online game. The video's content can be targeted towards beginners of this game and to gamers who want to learn more about the game, with the motivation in mind to buy the game in case they like it. The user can set 120 several tags that will help to characterize the targeted audience. The user can use keywords to pinpoint the target audience, such as players of the game, for example by assigning a tag like "game X" to the video. Preferably, the user may also state a gender and a typical age or age range, such as "everyone between 18 and 35", and further specify a membership of a certain fan base or group, for example by setting a flag like "fan of game X". Furthermore, the user may add a skill level of a player in order to select only those players as target audience that did not play the game for more than 20 hours or the like, in order to define a target audience for the uploaded content.

According to another example of utilizing the inventive method according to an embodiment of the present invention, a user may upload 110 content such as photographs of friends taken at a day of a certain event, such as an international motor show, to a social network. The user may attach 120 content-based tags and other information to the photographs based on his knowledge about the target group and the kind of topics that will interest a typical viewer of the target group. Tags in this exemplifying embodiment could specify cars and other motor vehicles, participating manufacturers, the venue of the show and others. Advertisements matching these criteria will then be selected and presented in connection with the photographs. Consequently, when the content of the page is being browsed 140 by interested viewers, the advertisements will reflect the topics of the content and therefore match with interests of the audience. It is therefore significantly more likely that viewers of the page will interact 140 with the advertisements, thus adding value for the companies being advertised and preferably earning 150 the user a small share of the revenue.

In another exemplary embodiment of the present invention, a user may upload 110 content about a sports team, such as a football team, for example, a review of the last game and predictions for upcoming tournaments. While the user would naturally add 120 content-based tags such as "football" and the name of the favorite team, the user may also add 120 date information or time-based tags such as "until August 6, 2010", since the content may only be relevant while the tournament proceeds, if the selected advertisements rely on that specific time-frame, such as sales of tickets for a match or special offers taking place during that time. The user may edit 160 the time-based tags at any time later on, e.g., by updating, modifying, or deleting the time-based tags. Should the user, for example, find that the uploaded content is still being viewed 140 after the time period, the user may preferably edit 160 the information in order to select new suitable advertisements.

It is to be understood that while the inventive method has been described using exemplifying embodiments, the present invention is not restricted to any of these examples and their particular processing steps or features, such as the format of the information or uploading of a particular content. Also the exemplifying embodiments do not define mutually exclusive alternative embodiments of the present invention. Rather, the features and processing steps of the exemplifying embodiments may be combined or omitted in any manner and such combinations are explicitly covered and defined by the inventive method.

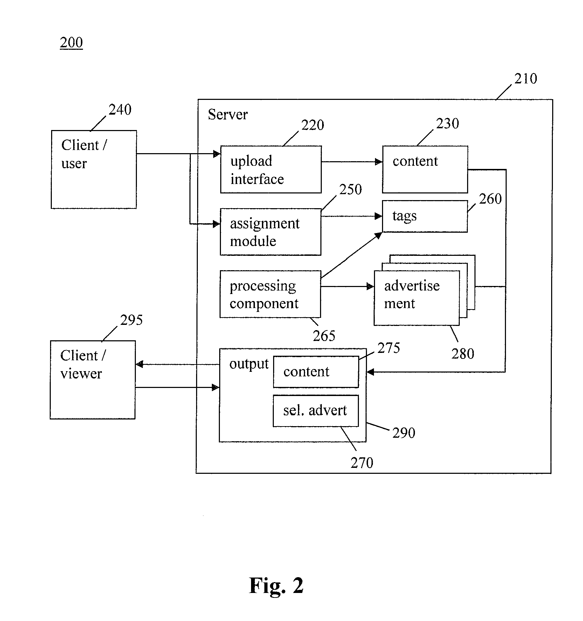

Fig. 2 shows a schematic illustration of a system 200 comprising a server 210 according to an exemplifying embodiment of the present invention. The server 210 may comprise an upload interface 220 which is configured to upload content 230 from a client of a user 240. The server 210 may also comprise an assignment module 250 that preferably enables the user 240 to assign information, such as tags 260, to said content 230. The user 240 may also utilize the assignment module 250 to assign information, such as keywords, parameters or any suitable data to the content 230. Preferably the information may specify advertisement or presentation characteristics. Said tags 260 and further information may, for example, specify a time period for the advertisement, topics addressed by an advertisement, target group, media type, presentation type, and format of advertisement and others.

The server 210 also comprises a processing component 265, which is preferably configured to select an advertisement 270 from a plurality of advertisements 280 based on criteria defined by the corresponding tags 260 or additional information. The server 210 also comprises an output 290 configured to render the content 230 in connection with the selected advertisement 270. Preferably, the selected advertisement 270 is also arranged in relation to the content 230 based on information provided by tags 260. For example, tags 260 may define a media type, a presentation type, or a format of a suitable advertisement and may specify a location where the selected advertisement 270 has to be displayed in relation to the displayed content 275, or with regard to the content's size and position. A client of a viewer 295 may access the output 290 of the server 210 and view the displayed content 275 and the selected advertisement 270. Furthermore, the viewer 295 may interact with the selected advertisement 270, which may be monitored by the server 210 and may lead to assignment of credits to the user 240 when said viewer 295 interacts with the selected advertisement 270, e.g., by clicking, activating, or choosing an interactive content of the selected advertisement 270.

The server 210 may be any kind of a conventional or dedicated server system comprising a single computer or a cluster of computing devices. The server 210 preferably hosts a platform enabling users 240 to upload content 230 to present to an audience, such as viewer 295. The platform may be any kind of a media environment, like social networking sites, interactive television, user/corporate-driven media applications, or any other media site, such as blogs, forums, and social networks. Preferably, clients 240, 295 are connected to the server 210 via any kind of network allowing for one- or bi-directional communication between server 210 and clients 240, 295, such as the Internet, interactive television network, cable network or satellite network or a home media entertainment network, wireless network or mobile network. Also, clients 240, 295 could be any kind of computing platform such as conventional personal computers, personal digital assistants, mobile devices, mobile telephones, tablet PCs or other mobile and portable devices capable of accessing the network. Consequently, the system 200 for targeting of advertisement according to an embodiment of the present invention may comprise server 210 according to an embodiment of the present invention, a network, and one or more clients 240, 295 connected to the server 210 via the network, wherein at least one client 240 of the one or more clients 240, 295 is operated by the user.

The data structure of the information assigned to the content 230 may include a list of tags and/or keywords or may comprise parameters with associated values arranged in an array or in any other suitable data format. The processing component 265 or a dedicated matching component of the processing component 265 may match the information assigned to the content 230 with characteristics of each one of the plurality of advertisements 280 provided at the server, and compute a matching score for each advertisement. The processing components 265 may apply any similarity measure to calculate a matching score for each of the advertisements 280 with regard to the uploaded content 230. The processing component 265 preferably pre-selects a number of advertisements with the highest matching scores. The pre-selected advertisements are preferably ranked according to the matching score or any suitable weighting function. In addition, the processing component 265 may also evaluate further types of tags 260 and information assigned to the content 230, such as time-based tags, in order to further rank the pre-selected advertisements or to remove advertisements not complying with requirements defined by tags 260 from the group of pre-selected advertisements. Subsequently, the processing component 265 may select the advertisement 270 for presentation based directly on the ranking or based on a further weighting or random function, or a combination thereof. Preferably, the ranking of the selected advertisement 270 is degraded such that advertisement 270 is disregarded, or less likely to be selected, during the next or any subsequent selection from the group of pre-selected advertisements.

In addition, the user 240 may assign further tags 260 in order to avoid a clash of potential advertisements 280 with the uploaded content 230. This can partially be dealt with by use of information such as content- and time-based tags, as discussed with regard to other exemplifying embodiments. However, the user 240 may also control the presentation characteristics of advertisements. For example, if the content 230 is a video that is preferably experienced in full-screen mode, the user 240 may select an option that ensures that advertisements will be, for example, seen picture-in-picture, appearing in a small window in one corner of the video. Similarly, if the content 230 comprises a song or other audio data, the user 240 may assign information to the content 230 which lead to selection of advertisements that have a large visual presence, but do not include sound. Likewise, if photographs, text or other data that do not include sound are uploaded to the server 210, the user 240 may preferably select advertisements that do comprise audio data.

The user 240 may also define tags 260 which place the selected advertisement 270 on a screen rendered by the output 290 in a position wherever the advertisement 270 appears best and non-disruptive or non-disturbing to the audience, for example, at a certain size and position, such as below or at one side of the content. The user 240 may also specify and control pop-up advertisements by assigning appropriate tags 260, defining whether he wants pop-ups to appear with the content 230 or not. The user 240 may also designate a particular or additional communication channel, or an additional window rendered by the output 290, which is configured to receive a live feed of selected advertisements 270 from the server 210.

It is to be understood that many modifications may be provided to the exemplifying embodiments of the inventive method or server without leaving the scope of the invention. For example, the assignment of information to the uploaded content may be performed at different stages of processing. Also, the output of the inventive server presenting the content in connection with the selected advertisement may be of any suitable kind, such as an interface to a media environment, an interface for streaming media or for broadcasting the content and the selected advertisement to a viewer or an interested audience, as well as combinations thereof. Consequently, the invention may be practiced within the scope of the claims differently from the examples described. Also, the described features and characteristics of the invention may be of importance for the invention in any combination.

## Claims

1. A method for targeting of advertisement, comprising:
uploading content provided by a user;
assigning information to the content by the user;
selecting advertisement based on the information;
presenting the content in connection with the selected advertisement based on the information;
modifying the information by the user after the advertisement has been selected;
selecting new advertisement based on the modified information; and
presenting the content in connection with the selected new advertisement based on the modified information.

2. The method of claim 1, wherein said assigning information to the content is performed during uploading of the content or after the content has been uploaded.

3. The method of claim 1 or 2, wherein said uploading content further comprises posting the content on a platform hosted by a server.

4. The method according to one of the preceding claims, wherein said presenting the content in connection with the selected advertisement comprises presenting the advertisement via a live stream or a live feed or presenting the content in a media environment.

5. The method according to one of the preceding claims, wherein a viewer watching the presented content and advertisement interacts with the advertisement.

6. The method of claim 5, further comprising assigning the user a credit when the viewer interacts with the advertisement.

7. The method according to one of the preceding claims, wherein said assigning information to the content comprises assigning a data structure including one or more elements, each element representing one of a tag, a keyword, and a parameter, wherein said information specifies one or more of a target group, a media type, a presentation format, a time period for presenting the selected advertisement, and topics related to the content, a preferred advertisement or both.

8. A computer-readable medium having instructions stored thereon, said instructions, when installed and executed on a computing device, causing said computing device to perform a method according to one of the preceding claims.

9. A server for targeting of advertisement, comprising:
an upload interface configured to upload content provided by a user to the server;
an assignment module accessible by the user, said assignment module configured to assign information to the content;
a processing component configured to select advertisement based on the information; and
an output configured to present the content in connection with the selected advertisement based on the information,
wherein the assignment module is further configured to allow the user to modify the information after the advertisement has been selected by the processing component,
wherein said processing component is further configured to select new advertisement based on the modified information and said output is further configured to present the content in connection with the selected new advertisement based on the modified information.

10. The server of claim 9, wherein said assignment module is further configured to allow the user to assign the information to the content during uploading of the content or after the content has been uploaded.

11. The server of claim 9 or 10, further comprising a platform hosted by the server, wherein the content is posted on the platform.

12. The server according to one of the claims 9 to 11, wherein said output includes a live stream or a live feed to present the content in connection with the selected advertisement.

13. The server according to one of the claims 9 to 12, wherein said server hosts a media environment coupled to the output to present the content in connection with the selected advertisement.

14. The server according to one of the claims 9 to 13, further comprising a feedback channel coupled to the output and configured to provide feedback about interaction of a viewer with the presented advertisement.

15. The server according to one of the claims 9 to 14, further comprising means to assign the user a credit when the viewer interacts with the advertisement.
